Europäisches Patentamt

(19) European Patent Office

Office européen des brevets

(11) Veröffentlichungsnummer: **0 144 048**
**B1**

(12) **EUROPÄISCHE PATENTSCHRIFT**

(45) Veröffentlichungstag der Patentschrift:
31.05.89

(51) Int. Cl.⁴: **H 04 M 1/08**

(21) Anmeldenummer: 84114141.9

(22) Anmeldetag: 22.11.84

(54) **Gabelumschalter für Fernsprechgeräte.**

(30) Priorität: 25.11.83 DE 3342730

(43) Veröffentlichungstag der Anmeldung:
12.06.85 Patentblatt 85/24

(45) Bekanntmachung des Hinweises auf die Patenterteilung:
31.05.89 Patentblatt 89/22

(84) Benannte Vertragsstaaten:
AT BE CH DE FR GB IT LI LU NL SE

(56) Entgegenhaltungen:
DE-A-1 296 209
DE-A-3 111 597
FR-A-1 106 562

(73) Patentinhaber: **Siemens Aktiengesellschaft Berlin und München, Wittelsbacherplatz 2, D-8000 München 2 (DE)**

(72) Erfinder: **Breu, Karl- Jan, Dipl.- Ing. (FH)., Grasslfinger Strasse 7, D-8038 Gröbenzell (DE)**
Erfinder: **Schinke, Hans- Joachim, Dipl.- Ing., Euckenstrasse 42, D-8000 München 70 (DE)**

## Beschreibung

Die Erfindung betrifft einen Gabelumschalter für Fernsprechgeräte mit einem Kontaktträger und einen schwenkbar an diesem gelagerten Antriebshebel, wobei der Antriebshebei bei in den Fernsprecher eingebautem Gabelumschalter gegen eine mechanische Vorspannung mittels wenigstens einer die Gehäusewandung des Fernsprechers in einem Durchbruch beweglich durchsetzenden Schaltleiste von der Außenseite des Gehäuses mechanisch betätigbar ist und wobei die Schaltleiste am freien Ende des Antriebshebels des Gabelumschalters um eine Achse schwenkbar angelenkt und mit auf die Schwenkachse bezogenem Axialspiel längsbeweglich geführt ist. Eine derartige Anordnung ist durch die FR-A-1 108 562 bekannt.

Bei einem Fernsprecher, dessen Funktionsteile aus Gründen rationeller Montage ausschließlich einem vom Gehäuse umschlossenen Chassis zugeordnet sein sollen, wird es als störend empfunden, die Gehäusekappe allein einer Schaltleiste wegen, die unverlierbar an dieser zu verankern ist, zum Gegenstand eines eigenen Montagevorganges zu machen. Dies wird bei der bekannten Anordnung ebenfalls bereits vermieden.

Der Erfindung liegt die Aufgabe zugrunde, für die Anordnung der Schaltleiste ebenfalls eine Möglichkeit aufzuzeigen, die ihr unverlierbares Festlegen im Gehäusedurchbruch erübrigt und die darüber hinaus eine einfache Herstellung der Verbindung zwischen Schaltleiste und Antriebshebel ermöglicht.

Diese Aufgabe ist erfindungsgemäß dadurch gelöst, daß zwei Lagerzapfen, die die Schwenkachse der Schaltleiste verkörpern, und zwei mit diesen korrespondierende Lageraugen in entsprechender Zuordnung am Antriebshebel bzw. an der Schaltleiste derart angeordnet sind, daß die Lagerzapfen für die Schaltleiste mit ihren freien Enden in gleicher Richtung orientiert sind.

Bei einer derartigen lösbaren Schwenkverbindung der Schaltleiste mit dem Antriebshebel des Gabelumschalters erübrigt sich ein Verankern der Schaltleiste im Gehäusedurchbruch, wozu nach der einfachen Herstellung des Gehäuses als Kunststoffspritzteil ein eigener Montagevorgang an diesem erforderlich geworden wäre. Beim Aufsetzen der Gehäusekappe auf das den Gabelumschalter tragende Chassis kann sich stattdessen die dem Antriebshebel schwenk- und axialverschiebbar zugeordnete Schaltleiste von innen in den entsprechend zugeordneten Durchbruch der Gehäusekappe einführen.

Ein weiterer Vorteil ist die einfache Herstellung der Verbindung, da diese durch Aufstecken der Lageraugen und Axialverschiebung der Schaltleiste in Anschlagrichtung vorgenommen werden kann.

Für eine weitere Vereinfachung bei der Herstellung der Schwenkverbindung können die beiden Lageraugen der Schaltleiste an ihren beim Aufstecken den freien Enden der Lagerzapfen zugekehrten Seitenflächen jeweils mit einem die betreffende Bohrung halbrund umgebenden, kragenartigen Vorsprung versehen sein. So ausgestattete Lageraugen ermöglichen das Aufsetzen der kragenartigen Vorsprünge in rechtwinklig zur Schwenkachse orientierter Richtung auf die freien Enden der Lagerzapfen, zwecks Vorzentrierung der jeweiligen Bohrung zum betreffenden Zapfen. Das gleichzeitige Einführen der beiden Zapfen in die Bohrungen wird durch eine derartige Vorzentrierung völlig problemlos.

Für die Unverlierbarkeit der schwenkbar auf den Antriebshebel aufgesteckten Schaltleiste kann am Antriebshebel, zwischen den beiden Lagerzapfen für die Schaltleiste ein annähernd achsparallel orientierter, elastischer Sperrstift eingeschlossen sein, dessen freies Ende in die den Lagerzapfen entgegengesetzte Richtung weist und rechtwinklig zur Schwenkachse der Schaltleiste auslenkbar ist, während zwischen den beiden Lageraugen der Schaltleiste ein rechtwinklig zur Schwenkachse orientierter, mit dem Sperrstift korrespondierender Anschlagsteg vorgesehen sein kann. Sperrstift und Anschlagsteg wirken als Rastelemente zusammen, wobei der Sperrstift beim Einführen der Lagerzapfen des Antriebshebels in die Bohrungen der Lageraugen der Schaltleiste zunächst von der Kante des Anschlagsteges elastisch ausgelenkt, dann jedoch, bei weiterer Axialbewegung der Schaltleiste, freigegeben wird und sich mit seiner Stirnfläche einer Seitenfläche des Anschlagsteges in Anschlagposition gegenübersteht. Für eine Vereinfachung bei der Herstellung der verrastbaren Schwenkverbindung kann zwischen den Stirnflächen des Sperrstifts und des sich diesem entgegenstreckenden Lagerzapfens ein senkrecht zur Schwenkachse orientierter Vorsprung am Antriebshebel vorgesehen sein, der auf seiner der Stirnfläche des betreffenden Lagerzapfens zugewandten Seite eine keilförmig geneigte Führungsfläche für das betreffende Lagerauge beim Einsetzen der Schaltleiste aufweist.

Für die Möglichkeit eines begrenzten Axialspiels einer derartigen, durch die Rastelemente unverlierbar gemachten Verbindung können zusätzlich zum elastischen Sperrstift und dem Anschlagsteg weitere, in entgegengesetzter Richtung wirkende, paarweise korrespondierende, starre Anschlagflächen von den die Lagerzapfen tragenden Seitenflächen des Antriebshebels einerseits, und den entsprechenden Seitenflächen der Lageraugen der Schaltleiste andererseits gebildet sein.

Bei einer derartigen Verbindung ist für das erwünschte Axialspiel nur noch an eine ausreichende Dimensionierung der Länge der Lagerzapfen zu denken. Für eine in beiden Richtungen wirksame Begrenzung dieses Axialspiels ist darüber hinaus eine entsprechende mäßliche Zuordnung der Anschlagflächen an Antriebshebel und Schaltleiste, nämlich der Stirnfläche des Sperrstifts und der die Lagerzapfen tragenden Seitenflächen des Antriebshebels bzw. der Seitenfläche des Anschlagsteges und jeweils einer der Seitenflächen der Lageraugen der Schaltleiste erforderlich.

Für eine wenigstens einseitige Begrenzung der Schwenkbewegung der Schaltleiste am Antriebshebel können paarweise korrespondierende, starre Anschlagflächen von der Unterkante der Schaltleiste und der Vorderkante des Antriebshebels gebildet sein.

Die Anschlagstellungen für die Schwenkbarkeit und Axialverschiebbarkeit der Schaltleiste können mit Rücksicht auf das Aufsetzen der Gehäusekappe so festgelegt sein, daß das Einführen der Schaltleiste in den Gehäusedurchbruch optimal ermöglicht ist. An der Innenwand des Fernsprechergehäuses kann darüber hinaus wenigstens eine eine geneigte Führungskante bildende Rippe vorgesehen sein, die das Einführen der Schaltleiste trotz zur Vermeidung von Staubeintritt ins Gehäuseinnere eng bemessenem Durchbruch selbst aus extremen Schwenk- bzw. Verschiebungsstellungen ermöglicht.

Im folgenden sei die Erfindung anhand von in den Zeichnungen dargestellten Ausführungsbeispielen näher erläutert. Es zeigen:

Fig. 1 den Gabelumschalter mit Kontaktträger, Antriebshebel und Schaltleiste in Aufrißdarstellung,

Fig. 2 ein Lagerauge der Schaltleiste in perspektivischer Darstellung,

Fig. 3 den Gabelumschalter entsprechend Fig. 1 in Draufsicht, bei ausgehängter Schaltleiste,

Fig. 4 den für das Einhängen der Schaltleiste eingerichteten Abschnitt des Antriebshebels und die ausgehängte Schaltleiste in um 90° geklappter Seitenansicht zu Fig. 3,

Fig. 5 den Gabelumschalter entsprechend der Darstellung in Fig. 3, jedoch mit eingehängter Schaltleiste

Fig. 6 den die Schaltleiste tragenden Abschnitt des Antriebshebels in um 90° geklappter Seitenansicht zu Fig. 5.

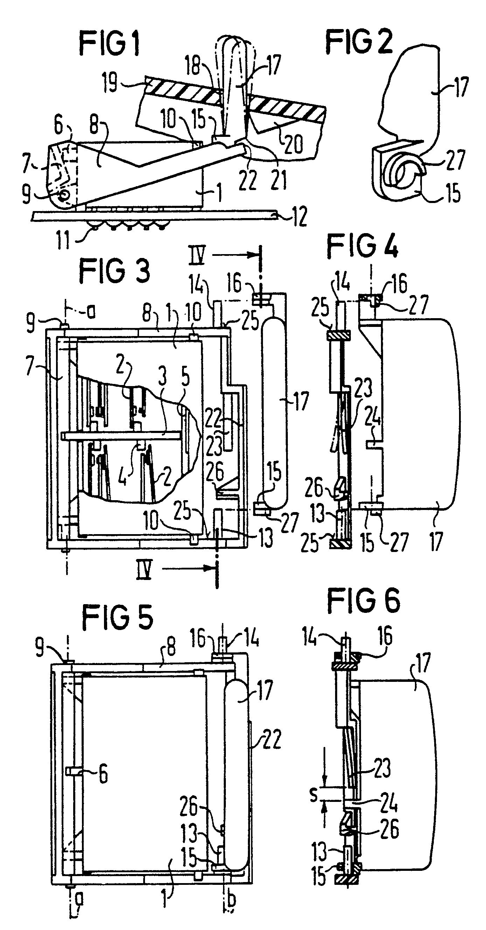

Der Gabelumschalter besitzt wie im wesentlichen aus Fig. 1 und 3 erkennbar ist einen Kontaktträger 1, der mehrere in Federsätzen zusammenwirkende Kontaktfedern 2, einen Betätigungsschieber 3 mit Stollen 4 zum Auslenken der Kontaktfedern, und eine Rückstellfeder 5 für den Betätigungsschieber enthält, welche Teile in der Darstellung nach Fig. 3 durch die aufgebrochene Deckplatte des Kontaktträgers sichtbar gemacht sind. Die dargestellte Anordnung der Kontaktfedern ist nur als Beispiel zu betrachten.

Der Betätigungsschieber besitzt einen Vorsprung 6, der die Wandung des Kontaktträgers durchsetzt und an einer Traverse 7 des am Kontaktträger schwenkbar gelagerten Antriebshebels 8 mit von der Rückstellfeder erzeugter mechanischer Vorspannung anliegt. Der Antriebshebel umgibt den Kontaktträger rahmenartig und ist auf zwei am Kontaktträger vorgesehenen Lagerzapfen 9, die die Schwenkachse a verkörpern, gelagert.

Ferner sind am Kontaktträger Anschlagvorsprünge 10 mitgeformt, die die Schwenkbewegung des Antriebshebels 8 in einer Richtung begrenzen. In der anderen Richtung wird ein die Schwenkbarkeit begrenzender Anschlag im dargestellten Ausführungsbeispiel durch die auf den Betätigungsschieber 3 wirkende, in extrem ausgelenkter Stellung an der Seitenwand der Kontaktträgers zur Anlage kommende Traverse 7 des Antriebshebels gebildet. Die Lötfahnen 11 der Kontaktfedern durchsetzen die Bodenfläche des Kontaktträgers und ermöglichen das Einlöten in eine Leiterplatte 12.

Im achsfernen Bereich des Antriebshebels befinden sich zwei achsparallel und in gleicher Richtung orientierte, eine Achse b verkörpernde Lagerzapfen 13, 14, auf denen die mit entsprechenden Lageraugen 15, 16 versehene Schaltleiste 17 schwenk- und längsverschiebbar gelagert ist. Wenn die den Gabelumschalter tragende Leiterplatte 12 als Chassis nun starr im Gehäuseinnenraum eines Fernsprechgerätes montiert ist, soll die Schaltleiste 17 einen Durchbruch 18 der Gehäusewand 19 des Fernsprechers durchsetzen.

Die schwenkbare und in Achsrichtung verschiebbare Lagerung der Schaltleiste am Antriebshebel ermöglicht den Toleranzausgleich für das Einführen und das Bewegungsspiel der Schaltleiste im ansonsten eng dem Querschnitt der Schaltleiste angepaßten Gehäusedurchbruch 18. An der Innenfläche des Gehäuses 19 ist eine mit einer geneigten Kante an den Durchbruch 18 grenzende Führungsrippe 20 dargestellt, die das Einführen der Schaltleiste in den Durchbruch beim Aufsetzen des Gehäuses auf das den Gabelumschalter tragende Chassis erleichtert.

Die Schwenkbarkeit der Schaltleiste ist durch strichpunktierte Neigungsdarstellungen in Fig. 1 angedeutet und durch korrespondierende Anschlagflächen, von denen eine von der Unterkante 21 der Schaltleiste, die andere von der Vorderkante 22 des Antriebshebels dargestellt ist, zumindest in einer Richtung begrenzt. Ihre Längsverschiebbarkeit ist anhand der Figuren 3 und 4 verdeutlicht, in denen die Schaltleiste zwar ausgehängt, aber in unmittelbar benachbarter Position zum Antriebshebel gezeigt ist.

Beim Aufsetzen der Lageraugen 15, 16 der Schaltleiste auf die freien Enden der Lagerzapfen 13, 14 ist der elastische Sperrstift 23 am Antriebshebel durch den Anschlagsteg 24 der Schaltleiste rechtwinklig zur Achse auslenkbar, wie in Fig. 4 strichpunktiert dargestellt ist. Beim Aufschieben der Schaltleiste mit ihren beiden Lageraugen auf die Lagerzapfen in Richtung auf deren Trägerflächen 25 am Antriebshebel gleitet der Anschlagsteg 24 über das freie Ende des Sperrstifts 23, der dadurch freigegeben wird und aus elastischer Kraft in seine Ausgangsstellung zurückkehrt. Bei an den Trägerflächen der Lagerzapfen anliegenden Seitenflächen der Lageraugen der Schaltleiste entsprechend Fig. 5, 6 kann nun zwischen der Stirnfläche des Sperrstifts 23 und dem Anschlagsteg 24 der Schaltleiste konstruktiv ein bestimmter Abstand s vorgesehen sein, durch den das Axialspiel der Schaltleiste auf den Lagerzapfen begrenzt und die Verbindung zwischen Schaltleiste und Antriebshebel lösbar verrastet ist.

Ein Vorsprung 26 mit einer keilförmig geneigten Führungsfläche erleichtert das Aufsetzen des Lagerauges 15 der Schaltleiste auf das freie Ende des Lagerzapfens 13. Eine weitere Aufsetzerleichterung schaffen die an beiden Lageraugen vorgesehenen halbrunden, kragenartigen Vorsprünge 27 (Fig. 2).

## Patentansprüche

1. Gabelumschalter für Fernsprechgeräte, mit einem Kontaktträger (1) und einem schwenkbar an diesem gelagerten Antriebshebel (8), wobei der Antriebshebel bei in den Fernsprecher eingebautem Gabelumschalter mittels wenigstens einer die Gehäusewandung des Fernsprechers in einem Durchbruch beweglich durchsetzenden Schaltleiste (17) von der Außenseite des Gehäuses mechanisch betätigbar ist, und wobei die Schaltleiste (17) am freien Ende des Antriebshebels (8) des Gabelumschalters um eine Achse (b) schwenkbar angelenkt und mit auf die Schwenkachse bezogenem Axialspiel längs beweglich geführt ist, dadurch gekennzeichnet, daß zwei Lagerzapfen (13, 14), die die Schwenkachse, (b) der Schaltleiste (17) verkörpern, und zwei mit diesen korrespondierende Lageraugen (15, 16) in entsprechender Zuordnung am Antriebshebel (8) bzw. an der Schaltleiste (17) derart angeordnet sind, daß die Lagerzapfen (13, 14) für die Schaltleiste (17) mit ihren freien Enden in gleicher Richtung orientiert sind.

2. Gabelumschalter nach Anspruch 1, dadurch gekennzeichnet, daß die beiden an der Schaltleiste (17) vorgesehenen Lageraugen (15, 16) an ihren beim Zusammenfügen mit dem Antriebshebel den freien Enden der Lagerzapfen (13, 14) zugewandten Flächen jeweils mit einem die betreffende Bohrung halbrund umgebenden, kragenartigen Vorsprung (27) versehen sind.

3. Gabelumschalter nach Anspruch 2, dadurch gekennzeichnet, daß am Antriebshebel (8) zwischen den beiden Lagerzapfen (13, 14) für die Schaltleiste ein annähernd achsparallel orientierter, elastischer Sperrstift (23) eingeschlossen ist, dessen freies Ende in die den Lagerzapfen (13, 14) entgegengesetzte Richtung weist und rechtwinklig zur Schwenkachse (b) der Schaltleiste auslenkbar ist, während zwischen den beiden Lageraugen (15, 16) der Schaltleiste ein rechtwinklig zur Schwenkachse (b) orientierter, mit dem Sperrstift (23) korrespondierender Anschlagsteg (24) vorgesehen ist.

4. Gabelumschalter nach Anspruch 3, dadurch gekennzeichnet, daß zwischen den Stirnflächen des Sperrstifts (23) und des sich diesem entgegenstreckenden Lagerzapfens (13) ein senkrecht zur Schwenkachse orientierter Vorsprung (26) am Antriebshebel (8) vorgesehen ist, der auf seiner dem Lagerzapfen (13) zugewandten Seite eine keilförmig geneigte Führungsfläche für das Lagerauge (15) beim Einsetzen der Schaltleiste aufweist.

5. Gabelumschalter nach Anspruch 4, dadurch gekennzeichnet, daß zusätzlich zum elastischen Sperrstift und dem Anschlagsteg weitere, paarweise korrespondierende, starre Anschlagflächen von den die Lagerzapfen (13, 14) tragenden Seitenflächen (25) des Antriebshebels (8) einerseits, und den entsprechenden Seitenflächen der Lageraugen (15, 16) der Schaltleiste (17) andererseits, gebildet sind.

6. Gabelumschalter nach Anspruch 5, dadurch gekennzeichnet, daß paarweise korrespondierende, starre Anschlagflächen für eine wenigstens einseitige Begrenzung der Schwenkbewegung der Schaltleiste von der Unterkante (21) der Schaltleiste und der Vorderkante (22) des Antriebshebel gebildet sind.

## Claims

1. Hook switch for a telephone apparatus, having a contact carrier (1) and a drive lever (8) mounted pivotably on the latter, the drive lever being actuable mechanically from the outside of the housing by means of at least one switch bar (17) which penetrates the housing wall of the telephone movably in a perforation when the hook switch is installed in the telephone, and the switch bar (17) being articulated pivotably about an axis (b) to the free end of the drive lever (8) of the hook switch and guided with longitudinal mobility with axial play relative to the pivot axis, characterized in that two journals (13, 14) which embody the pivot axis (b) of the switch bar (17), and two bearing eyes (15, 16) corresponding to the latter, are arranged in corresponding association the drive lever (8) and on the switch bar (17) respectively such hat the journals (13, 14) for the switch bar (17) are oriented with their free ends in the same direction.

2. Hook switch according to Claim 1, characterized in that the two bearing eyes (15, 16) provided on the switch bar (17) are respectively provided on their surfaces which face the free ends of the journals (13, 14) when joined to the drive lever, with a collar-like projection (27) semicircularly surrounding the relevant bore.

3. Hook switch according to Claim 2, characterized in that a resilient locking pin (23), oriented approximately axially parallel, is enclosed between the two journals (13, 14) for the switch bar on the drive lever (8), the free end of which faces in the opposite direction to the journals (13, 14) and is deflectable at right angles to the pivot axis (b) of the switch bar, whilst a stop web (24) corresponding to the locking pin (23) and oriented at right angles to the pivot axis (b) is provided between the two bearing eyes (15, 16) of the switch bar.

4. Hook switch according to Claim 3, characterized in that a projection (26) oriented at right angles to the pivot axis, which is provided on the drive lever (8) between the end faces of the locking pin (23) and of the journal (13) which extends counter to the latter, exhibits on its side facing the journal (13) a guide surface inclined in wedge shape for the bearing eye (15) during the insertion of the switch bar.

5. Hook switch according to Claim 4, characterized in that in addition to the resilient locking pin and to the stop web, further rigid stop surfaces corresponding in pairs are formed by the lateral surfaces (25) of the drive lever (8) which support the journals (13, 14) on the one hand, and by the corresponding lateral surfaces of the bearing eyes (15, 16) of the switch bar (17) on the other hand.

6. Hook switch according to Claim 5, characterized in that rigid stop surfaces corresponding in pairs for an at least one-sided limitation of the pivotal movement of the swich bar are formed by the under edge (21) of the switch bar and by the front edge (22) of the drive lever.

**Revendications**

1. Fourche interruptrice pour des appareils téléphoniques, comportant un porte-contact (1) et un levier d'entraînement (8) monté pivotant sur ce dernier, ledit levier étant susceptible, lorsque la fourche interruptrice est montée dans l'appareil téléphonique, d'être actionné mécaniquement à l'aide d'au moins une barrette mobile de commutation (17) traversant une ouverture ménagée dans la paroi du boîtier de l'appareil téléphonique, à partir du côté extérieur du boîtier, et ladite barrette de commutation (17) étant articulée de manière à pouvoir pivoter autour d'un axe (b), sur l'extrémité libre du levier d'entraînement (8) de la fourche interruptrice et étant guidée de manière à être déplaçable longitudinalement avec un jeu axial par rapport à l'axe de pivotement, caractérisé par le fait que deux tourillons (13, 14), qui matérialisent l'axe de pivotement (b) de la barrette de commutation (17), et deux oeillets de support (13, 16), correspondant à ces tourillons, sont disposés, selon une association correspondante, sur le levier d'entraînement (8) et sur la barrette de commutation (17), de telle sorte que les extrémités libres des tourillons (13, 14) prévues pour la barrette de commutation (17) sont orientées dans la même direction.

2. Fourche interruptrice suivant la revendication 1, caractérisée par le fait que les deux oeillets de support (15, 16), qui sont prévus sur la barrette de commutation (17), comportent, au niveau de leurs surfaces tournées vers les extrémités libres des tourillons (13, 14), lors de leur assemblage avec le levier d'entraînement, des parties saillantes respectives en forme de collets (27), qui entourent, selon une configuration semi-circulaire, les perçages associés.

3. Fourche interruptrice suivant la revendication 2, caractérisée par le fait que sur le levier d'entraînement (8) se trouve engagée, entre les deux tourillons (13, 14) prévus pour la barrette de commutation, une tige élastique de blocage (23), qui est orientée de manière à être approximativement parallèle à l'axe et dont l'extrémité libre s'étend dans la direction tournée à l'opposé des tourillons (13, 14) et peut être déviée perpendiculairement à l'axe de pivotement (b), tandis qu'entre les oeillets de support (15, 16) de la barrette de commutation se trouve prévue une réglette de butée (24), qui est orientée perpendiculairement à l'axe de pivotement (b) et correspond à la tige de blocage (23).

4. Fourche interruptrice suivant la revendication 3, caracérisée par le fait qu'entre les faces frontales de la tige de blocage (23) et du tourillon (13), qui s'étend en direction de cette tige, se trouve prévue, sur le levier d'entraînement (8), une partie saillante (26), qui est orientée perpendiculairement à l'axe de pivotement et comporte, sur son côté tourné vers le tourillon (13), une surface de guidage inclinée en forme de coin pour l'oeillet de support (15), lors de l'insertion de la barrette de commutation.

5. Fourche interruptrice suivant la revendication 4, caractérisée par le fait qu'en plus de la tige élastique de blocage et de la réglette de butée, d'autres surfaces rigides de butée, qui se correspondent par couples, sont formées par les surfaces latérales (25), qui portent les tourillons (13, 14), du levier d'entraînement (8), d'une part, et par les faces latérales correspondantes des oeillets de support (15, 16) de la barrette de commutation (17), d'autre part.

6. Fourche interruptrice suivant la revendication 5, caractérisée par le fait que des surfaces rigides de butée, qui se correspondent par couples, sont formées, pour une limitation au moins unilatérale du mouvement de pivotement de la barrette de commutation, par le bord inférieur (21) de la barrette de commutation et par le bord avant (22) du levier d'entraînement.

FIG 1

FIG 2

FIG 3

FIG 4

FIG 5

FIG 6